# EUROPEAN PATENT APPLICATION

(11) **EP 4 468 817 A1**
(43) Date of publication of application: **27.11.2024**
(21) Application number: 23175709.7
(22) Date of filing: 26.05.2023
(51) Int. Cl.: H05B 3/03, B60H 1/22, F24H 3/04, F24H 9/1863, H05B 3/44

(54) **PTC HEATING DEVICE**

(71) Applicant: MAHLE International GmbH, 70376 Stuttgart (DE)
(72) Inventor: MAGNIER, Gilles, 90110 Rougemont-le-Chateau (FR); SEEWALD, Wolfgang, 71732 Tamm (DE); VIEHRIG, Falk, 70376 Stuttgart (DE); WANKE, Dr. Robin, 46530 Puzol (ES)
(74) Representative: BRP Renaud & Partner mbB Rechtsanwälte Patentanwälte Steuerberater

(57) **Abstract**

The invention relates to a PTC heating device (1),
- having a number of PTC heating elements (4),
- having a first contact plate (7), a second contact plate (8) and at least one further contact plate (9),
- wherein the first contact plate (7) contacts only a first part (10) of the number of the PTC heating elements (4) and the further contact plate (9) only a second part (11) of the number of the PTC heating elements (4), while the second contact plate (8) contacts all PTC heating elements (4),
- wherein the further contact plate (9) has a first portion (12) and a second portion (13),
- wherein the PTC heating elements (4) are arranged linearly to one another.

It is substantial for the invention
- that the first portion (12) of the further contact plate (9) runs along a narrow side (14) of the first part (10) of the number of the PTC heating elements (4) and spaced apart from the narrow side (14),
- that the first portion (12) of the further contact plate (9) has an angled cross-sectional profile (23).

## Description

The present invention relates to a PTC heating device, in particular for an air-conditioning system of a motor vehicle, and to a motor vehicle having such an air-conditioning system.

PTC heating devices, that is heating devices having PTC heating elements, are employed in air-conditioning systems of motor vehicles in order to heat air prior to being introduced into the vehicle interior.

Today's generations of electric PTC heating devices in electric vehicles are no longer operated in the 12V system of the vehicle, but directly at the battery voltage level of 400V or even 800V. The overwhelming majority of the PTC heating devices produced in series today merely provides for a simultaneous control of all PTC heating elements and not of individual PTC heating elements or regions consisting of multiple PTC heating elements. This means that in those embodiments it is not possible to adjust a distinct heating output in different zones, e.g. driver and co-driver, which is why a compromise regarding the heating output always has to be made.

From DE 10 2016 107 035 B4 a generic PTC heating device having a number of PTC heating elements is known, each of which comprise a first and second electrical contacting surface which lie opposite one another, and having a first contact plate, a second contact plate and at least one further contact plate, wherein the first contact plate electrically contacts only a first part of the number of the PTC heating elements on the first contacting surface of these and the further contact plate only a second part of the number of the PTC heating elements on the first contacting surface of these, while the second contact plate electrically contacts all PTC heating elements on the second contacting surface of the these. The further contact plate comprises a first, narrow portion which is arranged next to the first contact plate, and a second wide portion, which contacts the second part of the number of the PTC heating elements, wherein an insulation is arranged between the narrow portion of the first contact plate and the first part of the number of the PTC heating elements. The first, narrow portion is formed extremely thin and thus sensitive.

From EP 3 410 818 A1 a further PTC heating device having a number of PTC heating elements is known, each of which comprises a first and second electrical contacting surface which lie opposite one another and having a first contact plate, a second contact plate and at least one further contact plate. The further contact plate comprises a first, narrow, portion which is arranged next to the first contact plate, and a second, wide, portion, wherein the first, narrow, portion is likewise designed extremely thin and thus sensitive.

From DE 199 33 013 A1 a PTC heating device having multiple PTC heating elements is known, between which an electrical insulation is provided in order to form heating zones that are substantially independent of one another.

From EP 1 157 867 A1 an electric heating device having multiple heating elements assembled into a heating block is known. From DE 103 01 056 A1 and EP 1 452 357 A1 further heating devices are known. Disadvantageous with the PTC heating devices known from the prior art is in particular a thin design and thus high sensitivity of the contact plates.

The present invention therefore deals with the problem of stating for a PTC heating device of the generic type an improved or at least an alternative embodiment which is in particular stronger and can thus be handled more easily.

According to the invention, this problem is solved through the subjects of the independent claims. Advantageous embodiments are subject of the dependent claims.

The present invention is based on the general idea of forming a particularly narrow region of a contact plate of a PTC heating element of a PTC heating device with angled cross-sectional profile and thus significantly stronger. The PTC heating device according to the invention has a number of PTC heating elements which comprise a first and a second electrical contacting surface each, wherein the first electrical contacting surface lies opposite the second electrical contacting surface in each case. For the electrical contacting, a first contact plate, a second contact plate and at least one further contact plate are provided. The first contact plate contacts exclusively a first part of the number of the PTC heating elements on the first contacting surface of these, while the further contacting plate electrically contacts exclusively a second part of the number of the PTC heating elements on the first contacting surface of these. The second contact plate electrically contacts all PTC heating elements on the second contacting surface of these. The further contact plate has a first (narrow) portion which, seen in the longitudinal direction of the bar-shaped PTC heating device, is arranged next to the first contact plate, and a second (wide) portion, which electrically contacts the second part of the number of the PTC heating elements. The PTC heating elements are arranged linearly to one another, wherein the first portion of the further contact plate runs along on a narrow side of the first part of the number of the PTC heating elements and spaced apart from this narrow side. The first portion of the further contact plate has the cross-sectional profile angled according to the invention and is designed significantly narrower than the second portion of the further contact plate. By way of the at least two parts of PTC heating elements it is possible to divide these into individually controllable heating element groups. All things considered, a significantly stronger first portion of the further contact plate can be achieved with the PTC heating device according to the invention, as a result of which the further contact plate is altogether less sensitive.

The first portion and the second portion of the further contact plate can be formed in one piece, wherein it is also conceivable, alternatively, that the first and the second portion of the further contact plate are produced separately and are subsequently connected to one another, for example soldered or riveted.

In an advantageous further development of the PTC heating device according to the invention, an insulation is arranged between the first portion of the further contact plate and the first part of the number of the PTC heating elements. Such an insulation prevents a short-circuit and can additionally serve for positioning the first portion of the further contact plate.

The insulation can be arranged only in the region of the first portion of the further contact plate. Because of this, an extremely resource-saving use of insulating material and thus a cost-effective and sustainable production are possible.

In an alternative further development of the PTC heating device according to the invention, the insulation is part of a plastic frame which serves for positioning the first contact plate, the second and/or the further contact plate. The insulation serves for positioning and fixing the contact plates and thus fulfils two objectives simultaneously. Basically, such a plastic frame for fixing the individual PTC heating elements can be omitted as described in the preceding paragraph.

In an advantageous further development of the solution according to the invention, the insulation forms a positive connection at least with the first contact plate. A positioning or fixing of the first contact plate via the insulation in a housing of the PTC heating element can take place by way of such a positive connection. In contrast with a firmly bonded connection, such a positive connection also makes possible an easier disassembly of the PTC heating device for example for maintenance and/or repair purposes.

In a particularly preferred embodiment of the PTC heating device according to the invention, the insulation is formed as insulating film, as plastic injection-moulded jacket or as plastic plug-on part. In particular the possibility of forming the insulation as plastic injection-moulded jacket offers the major advantage of reliably fixing the insulation at least on the first part of the further contact plate. An insulating film offers the advantage of a comparatively space-optimised solution. In an embodiment of the insulation as plastic plug-on part it is possible in turn to be able to comparatively easily adapt the same for example to different contact plates.

In a further advantageous embodiment of the PTC heating device according to the invention, the PTC heating elements, the first contact plate, the second contact plate and the further contact plate are arranged sandwich-like between a first ceramic insulating plate and a second ceramic insulating plate. A positioning frame for fixing the PTC heating elements can be omitted in this case. The PTC heating elements, the first contact plate, the second contact plate and the further contact plate, as well as the two insulating plates, are inserted into a housing of the PTC heating elements, in particular a hose-shaped housing. Because of the sandwich-like construction, a particularly compact design can be achieved.

In a further advantageous embodiment of the PTC heating device according to the invention, the angled cross-sectional profile of the first portion of the further contact plate comprises two legs of different lengths. By way of the length of the respective leg, which can include a right angle between them in regions, a height or width of the first portion of the further contact plate can be influenced. Purely theoretically, two legs of the same length are also conceivable.

In a further advantageous embodiment of the solution according to the invention, the insulation is arranged without touching the PTC heating elements. In addition, it is also conceivable that the insulation of the first portion of the further contact plate is formed without touching the second contact plate. The insulation, i.e. the jacket, of the first portion of the further contact plate can have a height which corresponds to the height of a PTC heating element as well as the first contact plate and the second plate, as a result of which supporting of the two ceramic insulating plates via the insulation is made possible.

In a further advantageous embodiment of the PTC heating device according to the invention, the PTC heating elements are formed as common parts. This offers the major advantage of a cost-effective production and reduces the risk of incorrect installation. By designing the PTC heating element as common parts, storage and logistical costs can also be reduced.

In a particularly preferred embodiment of the PTC heating device according to the invention, the PTC heating elements are not only arranged linearly but also without offset relative to one another. Because of this, a space-optimised PTC heating device can be created.

Further, the present invention is based on the general idea of equipping an air-conditioning system for a motor vehicle with a PTC heating device according to the preceding paragraphs. Because of this it is possible to apply the advantages described with respect to the PTC heating device also to the air-conditioning system.

Further important features and advantages of the invention are obtained from the subclaims, from the drawings and from the associated figure description by way of the drawings.

It is to be understood that the features mentioned above and still to be explained in the following cannot only be used in the respective combination stated but also in other combinations or by themselves without leaving the scope of the present invention. Components mentioned above and still to be named in the following of a higher-level unit, such as for example a device, an apparatus or an arrangement which are referred to separately, can form separate components of the said unit or be integral regions or portions of the said unit even when shown otherwise in the drawings.

Preferred exemplary embodiments of the invention are shown in the drawings and are explained in more detail in the following description, wherein same reference numbers relate to same or similar or functionally same components.

There it shows, in each case schematically,
- Figure 1: a view of a first embodiment of a PTC heating device according to the invention,
- Figure 2: a sectional representation through the PTC heating device according to Figure 1,
- Figure 3: an exploded representation of a possible embodiment of a PTC heating device according to the invention without housing analogous to the Figures 1 and 2,
- Figure 4: different views of the first, the second and the further contact plate with insulation,
- Figure 5: a representation as in Figure 4, however with the further contact plate formed in one piece,
- Figure 6: a representation as in Figure 3, however with exclusively insulated first portion of the further contact plate,
- Figure 7: a view as in Figure 1, however in an embodiment according to Figure 6,
- Figure 8: a sectional representation through the PTC heating device according to the invention corresponding to Figure 7.

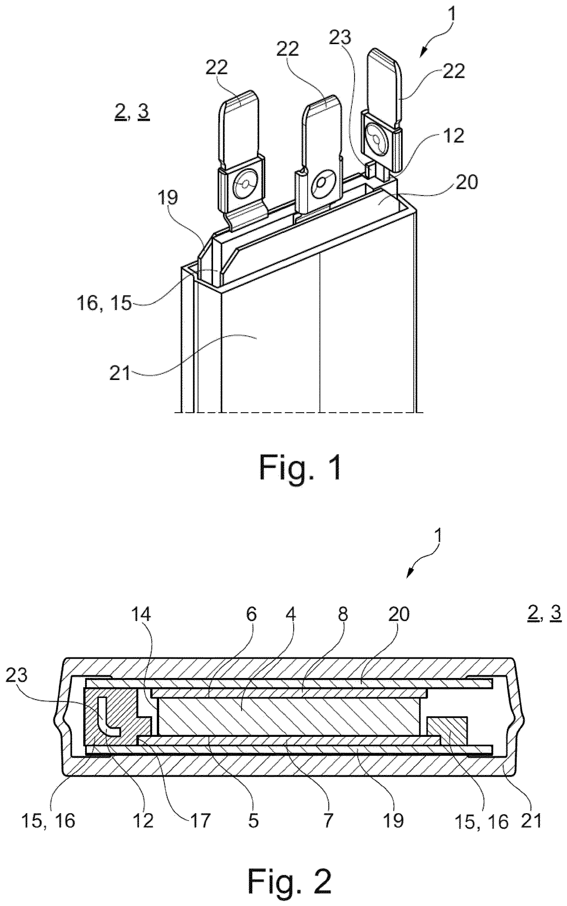

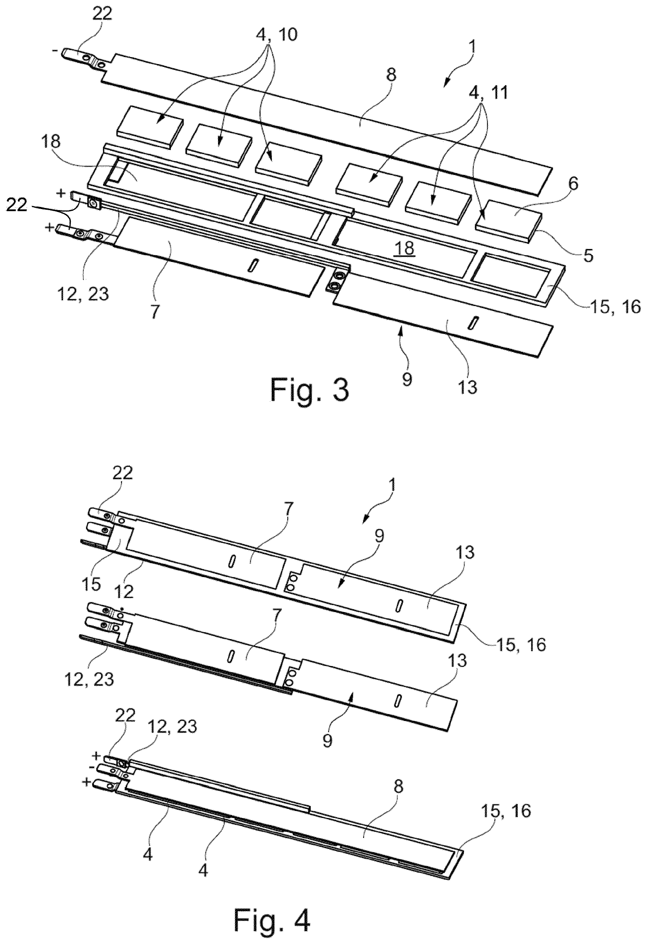

According to the Figures 1 to 8, a PTC heating device 1 according to the invention, which can be installed for example in an air-conditioning system 2 of a motor vehicle 3, comprises a number of PTC heating elements 4 (see in particular the Figures 3, 5 and 6), which have a first electrical contacting surface 5 and a second electrical contacting surface locating opposite, each. Provided, further, are a first contact plate 7, a second contact plate 8 and at least one further contact plate 9.

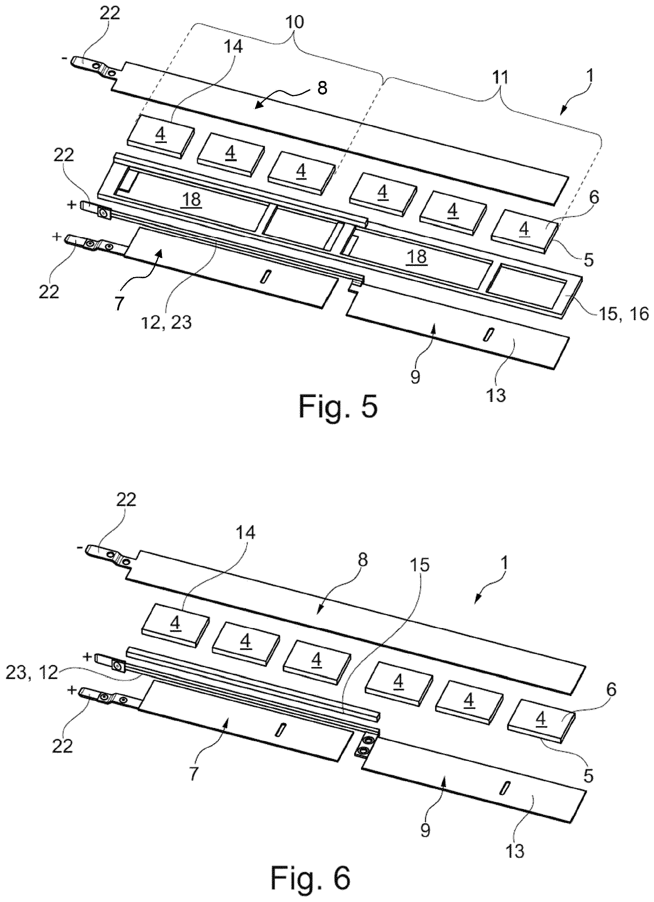

The first contact plate 7 is electrically contacted exclusively with a first part 10 of the number of the PTC heating elements 4 on the first contacting surface 5 of these, while the further contact plate 9 electrically contacts exclusively a second part 11 (see Figure 5) on the first contacting surface 5 of these. The second contact plate 8 contacts all PTC heating elements 4 on the second contacting surface 6 of these.

According to the Figures 3-6, the number of individual PTC heating elements 4 altogether is six, while the first part 10 includes three such PTC heating elements 4 and the second part 11 likewise three of such PTC heating elements 4. Even further PTC heating elements 4, which form an independent part and are contacted via an additional separate contact plate on their first contacting surface 5, are obviously also conceivable.

The further contact plate 9 has a first (narrow) portion 12, which is arranged next to the first contact plate 7, and a second (wide) portion 13, which contacts the second part 11 of the PTC heating elements 4.

In order to be able to now ensure a compact design of the PTC heating device 1 and at the same time a simplified handling during the assembly of the PTC heating device it is provided that the individual PTC heating elements 4 are arranged linearly to one another, preferentially even without offset in the transverse direction of the linear arrangement, wherein the first portion 12 of the further contact plate 9 runs along a narrow side 14 of the first part 10 of the number of the PTC heating elements 4 and spaced apart from this narrow side 14. Because of this, an space-optimised solution compared with a first portion 12 of the further contact plate 9 running along the first contacting surface 5 can be created since the first contact plate 7 need not be designed narrower but instead thicker in order to be able to transmit a desired electric energy.

In addition to this, the PTC heating elements 4 of the two parts 10, 11 can be arranged spaced apart from one another at an adequate distance to thermally separate the two heating zones from one another, but also for maintaining the air gaps and creep distances between the contact plates 7, 9 of the two zones (parts 10, 11).

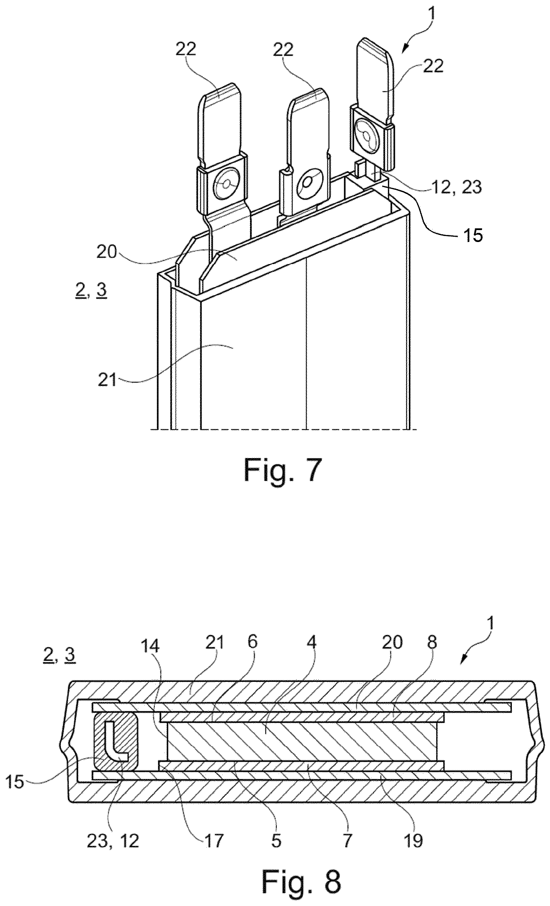

In addition, the first portion 12 of the further contact plate 9 has an angled cross-sectional profile 23 (see in particular the Figures 1, 2 as well as 7 and 8), as a result of which the first portion 12 can be formed significantly stiffer and also significantly stronger, by way of which in particular a reduced sensitivity with respect to touching can be achieved which facilitates the handling. The angled cross-sectional profile 23 of the first portion 12 of the further contact plate 9 can have two legs of different lengths, as is visible in particular in the Figures 2 and 8.

The first and second portion 12, 13 of the further contact plate 9 can be embodied in one piece as is shown according to Figure 5, wherein alternatively it is also conceivable that the first portion 12 and the second portion 13 of the further contact plate 9 are produced separately from one another and are subsequently connected to one another, for example via a riveted or soldered connection.

A contact surface of the second portion 13 of the further contact plate 9 with the associated PTC heating elements 4 of the second part 11 can be identical to a contact surface of the first contact plate 7 with the associated PTC heating elements 4 of the first part 10.

Between the first portion 12 of the further contact plate 9 and the first part 10 of the number of the PTC heating elements 4 an electrical insulation 15 is arranged, which for example does not touch the PTC heating elements 4, as is evident from the Figures 2 and 8. The insulation 15 can be part of a plastic frame 16 which serves for positioning at least one of the following components; the first contact plate 7, the second contact plate 8, the further contact plate 9. Normally the plastic frame 16 serves for positioning the first contact plate 7 and the further contact plate 9. Such an insulation 15 formed as plastic frame 16 is noticeable in particular in the Figures 1 as well as 3-5.

Alternatively to the design as plastic frame 16, the insulation 15 can also, at least partially, surround and thus electrically insulate the first portion 12 of the further contact plate 9, as is shown in the Figures 6 to 8. In addition, the insulation 15 can form a positive connection 17 with the first contact plate 7 and/or the second portion 13 of the further contact plate 9 and thereby hold the same for example in a recess 18 (see Figure 3).

The insulation 15 can also be designed as an insulating hose or also as thin insulating film, preferably however as plastic injection-moulded jacket (see Figures 1 to 5) or as plastic plug-on part (see Figures 6 and 7). Obviously it is also conceivable here that the insulation 15 exclusively surrounds and thus electrically insulates exclusively the first portion 12 of the further contact plate 9.

The insulation 15 is arranged without touching the PTC heating elements 4 and has for example a height which corresponds to the height of the first contact plate 7, of the PTC heating element 4 and of the second contact plate 8, as a result of which the insulation 15, just like the first contact plate 7, the second contact plate 8 and the PTC heating elements 4 can be arranged between the two ceramic insulating plates 19, 20. In this case, the insulation 15 can be employed for supporting between the two ceramic insulating plates 19, 20.

Incorporating the insulation 15 in a plastic frame 16, on which in addition at least one contact plate 7, 8, 9 can be held, substantially facilitates the assembly and for example a subsequent gluing of the PTC heating elements 4.

The PTC heating elements 4, the first contact plate 7, the second contact plate 8 and the further contact plate 9 can be arranged sandwich-like between a first ceramic insulating plate 19 and a second ceramic insulating plate 20 (see Figures 1 and 2 as well as 7 and 8), by way of which an electrical insulation relative to a housing 21 of the PTC heating device 1 takes place. The housing 21 can be formed for example as plastic jacket.

Preferentially, the PTC heating elements 4 are designed as common parts, as a result of which advantages with respect to the production costs as well as the storage and logistical costs materialise. At the same time, incorrect assembly can also be reliably excluded.

The individual contact plates 7, 8, 9 are coupled via corresponding connections 22 to a control device that is not shown, wherein a connection 22 of the second contact plate 8 is spaced apart as far as possible from the two connections 22 of the first contact plate 7 and of the further contact plate 9 in order to be able to ensure a reliable insulation.

All things considered, a significantly stronger embodiment can be created with the angled cross-sectional profile 23 in the region of the first portion 12 of the further contact plate 9, which reduces a sensitivity and facilitates assembly of the PTC heating device 1.

## Claims

1. A PTC heating device (1),
- having a number of PTC heating elements (4), each of which comprises a first electrical contacting surface (5) and a second electrical contacting surface (6) located opposite,
- having a first contact plate (7), a second contact plate (8) and at least one further contact plate (9),
- wherein the first contact plate (7) electrically contacts only a first part (10) of the number of the PTC heating elements (4) on the first contacting surface (5) of these and the further contact plate (9) only a second part (11) of the number of the PTC heating elements (4) on the first contacting surface (5) of these, wherein the second contact plate (8) electrically contacts all PTC heating elements (4) on the second contacting surface (6) of these,
- wherein the further contact plate (9) comprises a first portion (12), which is arranged next to the first contact plate (7), and a second portion (13), which electrically contacts the second part (11) of the number of the PTC heating elements (4),
- wherein the PTC heating elements (4) are arranged linearly to one another, **characterised**
- **in that** the first portion (12) of the further contact plate (9) runs along a narrow side (14) of the first part (10) of the number of the PTC heating elements (4) and spaced apart from the narrow side (14),
- **in that** the first portion (12) of the further contact plate (9) has an angled cross-sectional profile (23).

2. The PTC heating device according to Claim 1,
**characterised**
**in that** an insulation (15) is arranged between the first portion (12) of the further contact plate (9) and the first part (10) of the number of the PTC heating elements (4).

3. The PTC heating device according to Claim 2,
**characterised**
**in that** the insulation (15) is only arranged in the region of the first portion (12) of the further contact plate (9).

4. The PTC heating device according to Claim 2,
**characterised**
**in that** the insulation (15) is part of a plastic frame (16), which serves for positioning at least one of the following components; the first contact plate (7), the second contact plate (8), the further contact plate (9).

5. The PTC heating device according to any one of the Claims 2 to 4,
**characterised**
**in that** the insulation (15) forms a positive connection (17) with the first contact plate (7).

6. The PTC heating device according to any one of the Claims 2 to 5,
**characterised**
**in that** the insulation (15) is formed as plastic injection-moulded jacket or as plastic plug-on part.

7. The PTC heating device according to any one of the preceding claims,
**characterised**
**in that** the angled cross-sectional profile (23) has two legs of different lengths.

8. The PTC heating device according to any one of the Claims 2 to 7,
**characterised**
**in that** the insulation (15) is arranged without touching the PTC heating elements (4).

9. The PTC heating device according to any one of the preceding claims,
**characterised**
**in that** the PTC heating elements (4), the first contact plate (7), the second contact plate (8) and the further contact plate (9) are arranged sandwich-like between a first ceramic insulating plate (19) and a second ceramic insulating plate (20).

10. The PTC heating device according to any one of the preceding claims,
**characterised**
**in that** the PTC heating elements (4) are formed as common parts.

11. The PTC heating device according to any one of the preceding claims,
**characterised**
**in that** the PTC heating elements (4) are arranged without offset relative to one another in the transverse direction.

12. An air-conditioning system (2) for a motor vehicle (3) having a PTC heating device (1) according to any one of the preceding claims.

13. A motor vehicle (3) having an air-conditioning system (2) according to Claim 12.
